# FASCICULE DE BREVET EUROPEEN

(11) **EP 0 555 136 B1**
(45) Date de publication et mention de la délivrance du brevet: **30.07.1997**
(21) Numéro de dépôt: 93400252.8
(22) Date de dépôt: 02.02.1993
(51) Int. Cl.: C08L 23/02, C08K 13/02

(54) **Composition intumescente, ignifugeante et son application à des produits à base de matériaux polymères**
Quellbare, feuerfeste Zusammensetzung und seine Anwendung in Bezug auf Produkte aus Polymermaterialien
Swellable, fire-resistant composition and its use for products based on polymeric materials

(30) Priorité: 03.02.1992 FR 9201158
(43) Date de publication de la demande: 11.08.1993
(73) Titulaire: Société ROQUETTE FRERES S.A., F-62136 Lestrem (FR)
(72) Inventeur: Delobel, René, F-59659 Villeneuve d'Ascq (FR); Leroy, Jean-Marie, F-59493 Villeneuve d'Ascq (FR); Fleche, Guy, F-59190 Hazebrouck (FR)
(74) Mandataire: Ahner, Francis

(56) Documents cités:
- GB-A- 2 204 044
- CHEMICAL ABSTRACTS, vol. 114, no. 14, 8 Avril 1991, Columbus, Ohio, US; abstract no. 123762e, page 47 ;colonne 2

## Description

La présente invention est relative à une composition intumescente, ignifugeante, ainsi qu'à son application à des produits à base de matériaux polymères du type matériaux thermoplastiques ou thermodurcissables, peintures, vernis, résines ou similaires.

Les grands secteurs d'application des peintures et des matériaux "plastiques" que sont l'habitat, les transports, la câblerie électrique..., portent une attention toute particulière à la tenue au feu de leurs produits. Dans ces différents secteurs, la réglementation impose l'utilisation de matériaux présentant des propriétés ignifugeantes de plus en plus performantes. Parallèlement les émissions de fumées doivent être à la fois faibles, peu opaques, peu nocives et peu corrosives. A ces conditions, il faut ajouter une résistance accrue à la déformation, afin d'éviter tous risques de réinflammation par gouttage du matériau.

La réalisation de matériaux possédant des propriétés "retard au feu" satisfaisantes peut être abordée suivant deux stratégies :
. La première consiste à utiliser des matériaux intrinsèquement ignifuges.
   Par exemple, pour les polymères obtenus par polycondensation, il s'agit de fonctionnaliser le ou les réactifs par des groupements le plus souvent halogénés ou phosphates organiques halogénés, tel que le tricrésylphosphate dont l'action assure une protection retard au feu.
   Cela peut notamment s'appliquer aux mousses polyuréthanes (dans ce cas, les réactifs sont entre autres des polyols) ou aux résines phénoplastes.
. La seconde consiste à utiliser des formulations qui associent le matériau thermoplastique ou la peinture à des additifs "retardant de flamme".

Dans cette seconde stratégie, différentes solutions sont actuellement proposées :
. La plus développée d'entre elles consiste à utiliser des additifs halogénés, en particulier des produits bromés et chlorés, seuls ou en association le plus souvent avec le trioxyde d'antimoine. Cette solution bien qu'efficace conduit au cours du processus de dégradation thermique à la libération de produits toxiques et corrosifs (HCl, HBr, dioxines...) La législation tend donc à interdire l'utilisation de tels additifs, cette tendance n'allant qu'en s'accentuant compte tenu des préoccupations actuelles grandissantes en matière d'environnement.
. Une autre solution consiste à utiliser des systèmes développant des réactions endothermiques consécutives, en particulier des réactions de déshydratation, au cours d'un accroissement de température. Les charges agissent en gênant les transferts de chaleur qui conduisent à la combustion du matériau, mais aussi en absorbant l'énergie de la flamme.

Les agents "retardant de flamme" les plus utilisés dans cette catégorie sont l'hydroxyde d'aluminium et l'hydroxyde de magnésium.

Ces sytèmes pour être efficaces doivent être utilisés en très grande quantité (jusque 60 % en masse) ce qui entraîne généralement une diminution des propriétés du matériau en particulier des propriétés mécaniques pour ce qui concerne les plastiques, tandis que pour les peintures, il est évident que cette solution est totalement inapplicable.

Il est également possible d'associer ces deux derniers types d'additifs. Différents systèmes à base de produits halogénés et hydroxydes d'aluminium ou de magnésium ont ainsi été utilisés.

Cette solution n'élimine toutefois pas les problèmes inhérents à chacun des systèmes.
. La dernière solution, qui est celle qui nous intéresse dans la présente invention, consiste à utiliser des additifs développant un revêtement intumescent au contact du feu, c'est-à-dire une structure carbonée expansée à la surface du matériau.

Ces systèmes intumescents interviennent dans le processus retardant de flamme notamment par un mécanisme réactionnel en phase condensée, conduisant à la formation d'une structure constituant un bouclier thermique. Celui-ci limite les transferts de chaleur vers le matériau, ce qui minimise sa dégradation.

Le premier secteur d'application des systèmes intumescents a été celui des peintures. Leur utilisation dans le secteur des matériaux plastiques est actuellement en développement.

Les systèmes d'additifs susceptibles de développer un revêtement intumescent dans les matériaux polymères associent généralement :
. un ou des agents de carbonisation,
. un ou des agents déshydratants,
. un ou des agents de "gonflement" qui assurent le développement du caractère expansé du revêtement,
. voire un composé halogéné.

Cela est d'ailleurs décrit par VANDERSALL, à la page 116 d'un article intitulé "Intumescent Coating Systems, their development and chemistry" paru dans la revue J. FIRE & FLAMMABILITY, Vol. 2 (April 1971) p. 97-140.

Les agents de carbonisation peuvent être des composés polyhydriques tels que des hydrates de carbone, l'éthylène glycol, le mannitol, le sorbitol, le xylitol, l'arabitol, le pentaérythritol, le dextrose, ... .

Les agents déshydratants sont les plus souvent des acides ou des sels d'acide minéraux et en particulier des phosphates : phosphates organiques (alkyl ou aryl phosphates), phosphates organiques halogénés (trichloroéthyl phosphate), phosphates alcalins (phosphates de sodium, phosphates d'ammonium), phosphates alcalino-terreux (phosphates de calcium), polyphosphates alcalins ou alcalino terreux.

Les agents de "gonflement" les plus utilisés sont par exemple la mélamine, la dicyandiamide, l'urée.

Les halogènes mis en oeuvre sont, le plus souvent, des paraffines ou des caoutchoucs chlorés, ou bien encore le parachlorométaxylénol ou les résines tétrachlorophtaliques. On a vu que la présence de ce genre de produits n'est pas du tout recommandable au regard de leur toxicité et leur pouvoir corrosif.

Les agents déshydratants préférés sont en particulier les polyphosphates d'ammonium (PPA), alors que l'agent de carbonisation recommandé est le pentaérythritol (PER). En effet, ce composé possède quatre fonctions hydroxyle du type primaire, décrites par VANDERSALL (p. 131) comme celles qui sont le plus réactives et qui, à ce titre, sont préférentiellement utilisées dans les systèmes intumescents.

Ce préjugé favorable quant à son emploi comme agent déshydratant dans les compositions intumescentes (VANDERSALL, p. 133) se trouve confirmé ultérieurement par sa combinaison avec d'autres agents déshydratants, et en particulier le pyrophosphate diammonique (PY).

Il a par ailleurs été envisagé d'améliorer de telles compositions par l'addition d'un mélange huile de silicone / résine de silicone (GB-A-2 204 044).

Les propriétés de retard au feu de ces compositions préférentielles de l'art antérieur, PER/PPA et PER/PY ont été plus particulièrement étudiées avec le polypropylène.

Le système PER/PPA est décrit dans le document VANDERSALL, notamment aux pages 117, 119, 130, 131 ; tandis que le système PER/PY fait l'objet d'une étude rapportée dans les articles intitulés "Fire Retardance of Polypropylene : Action of Diammonium Pyrophosphate - Pentaerythritol Intumescent Mixture" - DELOBEL et Al - Polymer Degradation and Stability 23 (1989) 349-357, "Fire retardance of Polypropylene by Diammonium Pyrophosphate - Pentaerythritol : Spectroscopy characterization of protective coatings" - DELOBEL et Al - Polymer Degradation and Stability 30 - (1990) 41 - 56, et "Thermal behaviors of ammonium polyphosphate - pentaerythritol et ammonium pyrophosphate - pentaerythritol intumescent additives in polypropylene formulations" - DELOBEL et Al. - J. Fire Scie. 8(2) - (1990) - 85-108.

L'application de l'intumescence dans des matériaux thermoplastiques, qui usuellement sont transformés en produits finis par thermoformage (e.g. extrusion), nécessite la prise en compte d'un certain nombre de contraintes particulières.

En effet, les polymères thermoplastiques ont chacun une température de mise en oeuvre particulière, qu'il faut atteindre lors du formage. Il est donc bien évident que les constituants du système intumescent doivent être choisis de telle sorte que le processus d'intumescence ne débute pas lors du formage, aux alentours de la température de mise en oeuvre du polymère considéré : 150°C environ pour le polyéthylène et 220°C environ pour le polypropylène par exemple.

Par ailleurs, il importe que l'intumescence débute suffisamment tôt pour produire de façon efficace sa fonction de bouclier thermique, dans une gamme de température classiquement comprise entre 300 et 400°C. C'est un élément dont il faut tenir compte lors du choix des constituants de la composition ignifugeante.

Une autre contrainte liée aux matériaux thermoplastiques réside dans le fait que les constituants du système intumescent ne doivent pas avoir une température de fusion exagérément supérieure à celle du polymère considéré.

En effet, un constituant d'intumescence qui ne fondrait pas lors du formage du polymère, ne pourrait pas se mélanger de façon homogène avec ce dernier. Il en résulterait un matériau hétérogène, dont les qualités, notamment mécaniques, seraient inacceptables.

Or, la préservation des caractéristiques physiques est essentielle dans le cas des polymères thermoplastiques.

Le problème est donc ici de choisir des compositions dont les constituants satisfont à toutes ces contraintes apparemment antagonistes. Ceci se vérifie d'autant plus si l'on souhaite que ces compositions soient adaptables à une grande variété de polymères.

De façon générale pour tous les matériaux à base de polymères, la valeur d'une compositon intumescente ignifugeante s'apprécie en premier lieu par ses aptitudes à diminuer l'inflammabilité et la combustibilité du matériau auquel elle s'applique.

Ces deux propriétés sont respectivement mesurées à l'aide du test d'inflammabilité UL 94 (norme ISO DP 1210 (1982) - TC 61) et du test de détermination de l'indice d'Oxygène (LOI : Limit Oxygen Index - norme ISO 4589 - 1983).

Les compositions intumescentes classiques PER/PPA et PER/PY, bien que développant des propriétés retard au feu (LOI - UL 94) convenables, donnent des propriétés mécaniques médiocres dans leur application aux matériaux thermoplastiques.

En outre, elles souffrent d'une absence d'adaptabilité à une large gamme de polymères thermoplastiques. Le PER a un point de fusion trop élevé pour pouvoir être utilisé avec efficacité avec certains polymères, en particulier les polyoléfiniques.

De plus, il a été observé que, tant le PPA que le PER sont sujets à des phénomènes de sublimation, qui nuisent à la fois à la mise en oeuvre du matériau et au bon déroulement de la formation de la couche d'intumescence.

Enfin et surtout, ces compositions présentent l'inconvénient majeur de produire, dans les conditions du feu et avec certains polymères, des quantités non négligeables de fumées.

Désireuse d'améliorer les caractéristiques et les performances des compositions intumescentes ignifugeantes, la demanderesse a découvert, d'une manière particulièrement surprenante et inattendue allant à l'encontre de l'enseignement antérieur, que la combinaison d'un sucre-alcool avec du pyrophosphate diammonique convenait particulièrement bien.

Il s'ensuit que la composition intumescente ignifugeante applicable aux matériaux polymères selon la présente invention, comprend un mélange
. d'au moins un agent de carbonisation choisi parmi les monosaccharides hydrogénés suivants : sorbitol, arabitol, xylitol, mannitol ou un mélange d'entre eux,
. un agent acide déshydratant à base de pyrophosphate diammonique, à l'exception des compositions constituées par :
   (I) 20 à 60 % en poids d'une huile de silicone,
   (II) 10 à 40 % en poids d'une résine de silicone,
   (III) 5 à 60 % en poids d'un agent déshydratant, et
   (IV) un alcool polyhydrique dans un rapport pondéral avec ledit agent déshydratant compris entre environ 1/9 et environ 1/5.

La composition selon l'invention peut également contenir au moins un agent de gonflement.

Par sucre-alcool, on entend au sens de la présente invention, tout dérivé hydrogéné de composés saccharidiques renfermant au moins une fonction réductrice. Chaque fonction réductrice de ces sucres est transformée en une fonction alcool par hydrogénation, selon des procédés appropriés et connus en eux-mêmes.

Il convient de noter que les sucres-alcools suivant l'invention se caractérisent par la présence de fonctions hydroxyles primaires et secondaires.

Les composés saccharidiques ou sucres hydrogénés formant les sucres alcools suivant l'invention sont avantageusement choisis notamment parmi les composés suivants : monosaccharides, disaccharides, oligosaccharides et polysaccharides, hydrogénés ou un mélange d'entre eux, de préférence les monosaccharides hydrogénés.

Suivant un mode préféré de mise en oeuvre de l'invention, les sucres-alcools sont choisis dans le groupe non limitatif des monosaccharides hydrogénés suivants : sorbitol, mannitol, arabitol, xylitol ou un mélange d'entre eux : le xylitol étant particulièrement préféré.

On observe que cette composition intumescente donne des résultats tout à fait avantageux en ce qui concerne les propriétés de retard au feu, à savoir une inflammabilité et une combustibilité faibles, et ce, sans provoquer d'importantes émissions de fumées toxiques, en contact du feu.

En outre, il s'avère qu'elle convient parfaitement pour l'ignifugation de polymères thermoplastiques. On remarque en effet qu'elle ne nuit pas aux propriétés mécaniques desdits polymères et que, par ailleurs, elle bénéficie d'une grande souplesse d'utilisation : Elle est applicable et compatible à de nombreux polymères et copolymères de nature polyoléfinique.

Elle possède des caractéristiques physicochimiques telles qu'il n'y a pas de problèmes de réaction d'intumescence prématurée lors du thermoformage du polymère.

De façon tout à fait avantageuse, la réaction d'intumescence intervient à point nommé dans les conditions du feu pour chaque type de polymère ; de sorte que le revêtement est parfaitement formé et peut jouer son rôle de bouclier thermique pour des températures comprises entre 300 et 400°C.

On notera également que la composition suivant l'invention n'entraîne pas de coloration parasite ou de sensibilité aux U.V. dans les matériaux auxquels elles s'appliquent.

Il est aussi important de noter que son efficacité en ignifugation s'obtient sans avoir recours aux produits toxiques que sont les halogènes.

De plus, la composition suivant l'invention permet d'avoir une faible consommation de matière dans des conditions de feu.

En d'autres termes, elle est suffisamment performante dans la protection au feu, pour limiter, de façon notable, la dégradation du matériau à protéger lors de la combustion.

Tous ces avantages appréciables étaient pour le moins imprévisibles au regard de l'art antérieur.

En ce qui concerne les proportions relatives de l'agent de carbonisation et de l'agent déshydratant dans la composition, il faut indiquer qu'elles sont avantageusement les suivantes :
. de 20 à 80, de préférence de 40 à 70 et plus préférentiellement encore de 45 à 65 % molaire pour l'agent de carbonisation.
. et de 20 à 80, de préférence de 30 à 60, et plus préférentiellement encore de 35 à 55 % molaire pour l'agent déshydratant.

L'agent déshydratant utilisé est à base d'un sel de diammonium d'acide pyrophosphorique.

Il peut par exemple être obtenu par réaction d'ammoniac et d'acide pyrophosphorique en milieu alcoolique (cf INORGANIC SYNTHESIS P. 65 - 67, Vol 7, 1963, "Tetraammonium Pyrophosphate" C. SWANSON - F.Mc. COLLOUGH).

En pratique, l'agent déshydratant employé contient un mélange de sels d'ammonium d'acide pyrophosphorique, d'acide polyphosphorique et d'acide orthophosphorique.

Le procédé de préparation décrit ci-dessus permet d'obtenir une teneur en pyrophosphate de diammonium dans le mélange, de l'ordre de 60 % en poids.

Suivant une variante, la composition intumescente ignifugeante peut contenir un ou plusieurs autres agents déshydratants, outre le pyrophosphate diammonique.

Conformément à une autre variante de l'invention, on ajoute éventuellement à la composition au moins un agent de gonflement choisi parmi les composés azotés. On peut citer par exemple la mélamine, l'urée, la guanidine, la glycine entre autres. Cet ajout est facultatif étant donné que le pyrophosphate de diammonium remplit parfaitement la fonction de déshydratant et la fonction de gonflement.

Il va de soi que la composition selon l'invention peut être préparée extemporanément par mélange de ses différents constituants, par exemple sous forme de poudres, dans des proportions données. Le mélange obtenu constitue alors un additif destiné à être ajouté dans le matériau auquel on souhaite conférer des propriétés ignifugeantes.

Une autre façon de procéder consisterait à introduire séparément les différents constituants de la composition dans le matériau.

La présente invention concerne également l'application de la composition susdécrite à des matériaux polymères.

Ceux-ci peuvent être des matériaux polymères thermoplastiques ou thermodurcissables, des peintures, des vernis ou similaires.

Ces produits contenant la composition intumescente ignifugeante entrent donc dans le champ de la présente invention.

La charge de la composition dans ces matériaux est un facteur important au regard des performances d'ignifugation et de la préservation des qualités intrinsèques du matériau.

La charge représente ainsi 20 à 50 %, de préférence 25 à 35 % en poids du matériau, qu'il s'agisse de polymères thermoplastiques ou thermodurcissables, de peintures, de vernis ou de résines.

Parmi les matériaux thermoplastiques auxquels la composition suivant l'invention s'applique particulièrement bien, on peut citer les polymères et copolymères d'oléfines tels que le polyéthylène et le polypropylène.

La composition de l'invention est parfaitement compatible avec tous ces matériaux. Elle se mélange aisément avec eux sous forme granulaire ou pulvérulente. Elle n'engendre aucun problème lors de leur thermoformage et n'a pas de répercussion néfaste sur la qualité des produits formés.

Les exemples et les essais comparatifs qui suivent permettent de mieux comprendre l'invention et de mettre en évidence les avantages de la composition intumescente ignifugeante dans son application aux matériaux polymères thermoplastiques.

Dans les exemples 1 à 4 qui suivent, on a réalisé des éprouvettes comprenant une base en matériau polymère thermoplastique et un additif intumescent ignifugeant.

### 1. Matières premières utilisées dans les exemples

### a. Matériaux polymères thermoplastiques

. Polyéthylène basse densité radicalaire (Melt Index M.I. = 22 g/10 mn) sous forme de poudre commercialisé par la société EXXON sous la dénomination Escorene Micro type MP 65050.
. Polypropylène isotactique (70 % de cristallinité) sous forme de poudre commercialisé par la société ATOCHEM.

### b. Additif intumescent ignifugeant

### . Agent déshydratant pyrophosphate diammonique

La synthèse du pyrophosphate diammonique s'inspire d'une méthodologie tirée de INORGANIC SYNTHESIS P. 65 à 67, Volume 7, 1963, "Tetraammonium pyrophosphate" - C. SWANSON - F. MC COLLOUGH. Elle est basée sur une réaction de type acide-base. ELle consiste en l'addition d'ammoniac à une solution alcoolique d'acide pyrophosphorique.

Dans une première étape, l'acide pyrophosphorique commercialisé par la société "La Fonte Electrique" est dissout dans l'éthanol absolu à raison de 100 g d'acide par litre d'éthanol. La dissolution ainsi que la totalité de la synthèse sont réalisées à une température inférieure à 10°C pour éviter tout problème d'hydrolyse de l'acide et :tu pyrophosphate formé. Le fait de réaliser la synthèse en solution alcoolique permet la précipitation in situ de l'espèce phosphate.

L'ammoniac est additionné rapidement jusqu'à obtention d'un pH environ 2,4 (environ 30 à 40 mn pour des quantités d'acide de 100 g), la température étant toujours maintenue (de façon impérative) sous les 10°C.

Le produit ainsi obtenu après filtration et séchage sous vide est une poudre blanche finement divisée directement utilisable en tant qu'additif.

Le pyrophosphate titre 60 % en poids dans le mélange. On en tiendra compte pour les calculs de rapports molaires.

### . Agent de carbonisation

### . Agent de carbonisation de l'art antérieur

Pentaérythritol sous forme de poudre, commercialisé par la société ALDRICH sous la dénomination Pentaérythritol 91.

### Sucres-alcools suivant l'invention

Sorbitol sous forme de poudre, commercialisé par la société ROQUETTE FRERES, sous la marque déposée NEOSORB^{R}.

Mannitol sous forme de poudre, commercialisé par la société ROQUETTE FRERES.

Xylitol sous forme de poudre, commercialisé par la société ROQUETTE FRERES.

Mélange de mono, di, oligo et polysaccharides hydrogénés sous forme de poudre, commercialisé par la société ROQUETTE FRERES, sous la marque déposée POLYSORB^{R} 05 60.

### c. Méthode de préparation des éprouvettes

La réalisation des éprouvettes comprend plusieurs étapes :
1 - broyage (env. 250 µm) du mélange d'additifs (agent de carbonisation + agent déshydratant)
2 - addition du polymère au mélange broyé d'additifs et mélange intime dans un mélangeur du type de ceux commercialisés par la société LODIGE de manière à obtenir une répartition homogène.
3 - mise sous presse des formulations

Les éprouvettes sont moulées aux dimensions standard :
. pour le test L.O.I : 120 mm x 60 mm x 3 mm
. pour le test UL-94 : 127 mm x 12,7 mm x 3 mm
. pour le test de traction : 24 mm x 5 mm x 3 mm.

Les moules sont réalisés en aluminium.

La presse utilisée est une presse du type de celles commercialisées par la société DARAGON. Les moules sont placés entre deux plaques de téflon, puis mis sous presse à une température supérieure de 20°C à la température de fusion du polymère. La pression est maintenue à environ 50 bars pendant 10 mn.

Les tests de traction consistent d'une part en une mesure d'allongement et d'autre part en une mesure de contrainte nominale à la rupture. Ils sont réalisés sur une machine de traction INSTRON 311 (vitesse de traverse 5 mm/mn - température ambiante).

### EXEMPLE I :

Essais comparatifs de compositions intumescentes ignifugeantes suivant l'invention et d'une composition suivant l'art antérieur.

Le matériau polymère utilisé est du polyéthylène.

La charge dans le polymère de la composition intumescente ignifugeante testée s'élève à 35 % en poids.

Dans ces essais, on a procédé à des mesures quantitatives : mesure du LOI - évaluation UL94 - tests de traction, et à des appréciations qualitatives : dégagement de fumées - consommation de matière.

Les données et les résultats de ces essais sont présentés dans le tableau I qui suit.

Le TABLEAU I met bien en évidence le fait que les compositions intumescentes ignifugeantes sucre-alcool / PY selon l'invention présentent des propriétés "retard au feu" (LOI - UL 94) équivalentes à celles des compositions intumescentes ignifugeantes selon l'art antérieur.

Cependant, les compositions selon l'invention possèdent en outre les avantages essentiels de préserver de manière avantageuse les propriétés mécaniques du polymère, de minimiser les dégagements de fumées et la consommation de matière.

On soulignera les résultats particulièrement bons obtenus avec le xylitol.

### EXEMPLE II :

Incidence de la composition intumescente ignifugeante sur les propriétés mécaniques du matériau polymère thermoplastique.

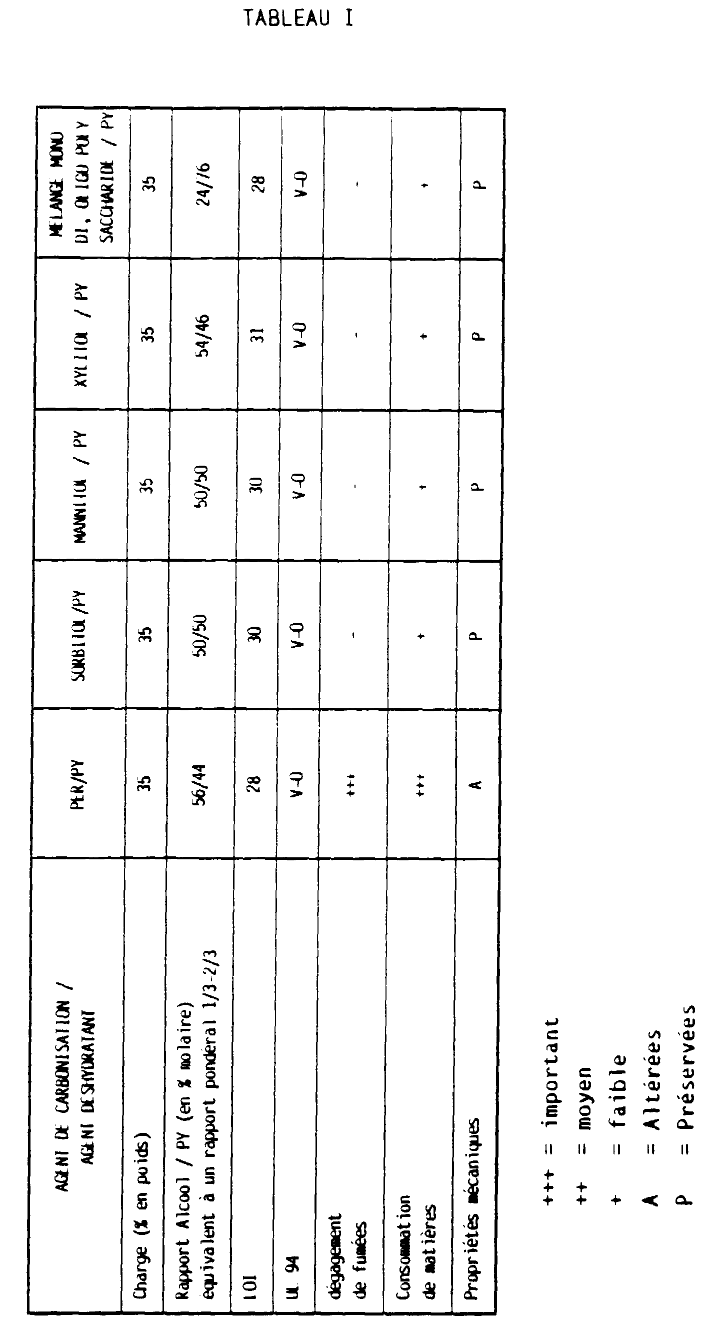

On a réalisé des essais de traction sur 5 types d'éprouvettes en polyéthylène : A, B, C, D, E, correspondant chacun à une formulation.

Les formulations dans le polyéthylène (PE), à 30 % en poids de charge, sont les suivantes :

| | Rapport Alcool/PY en % molaire |
|---|---|
| PE + PY + PER (A) | 56/44 |
| PE + PY + XYLITOL (B) | 54/46 |
| PE + PY + SORBITOL (C) | 50/50 |
| PE + PY + MANNITOL (D) | 50/50 |
| PE seul = (E) | |

A titre de référence, des essais de traction similaires ont été réalisés sur le polymère seul.

Le tableau II ci-après donne les résultats :
. allongement à la rupture (%)
. contrainte nominale à la rupture (N/m2)

Le TABLEAU II met bien en évidence le fait que les compositions sucre-alcool / PY selon l'invention préservent bien mieux les propriétés mécaniques du polymère que la composition intumescente ignifugeante PER / PY de l'art antérieur.

On soulignera les résultats particulièrement bons obtenus avec le xylitol.

### EXEMPLE III :

Influence des proportions relatives sucre-alcool / PY dans la composition suivant l'invention.

On a fait varier le rapport molaire sucre-alcool / PY de la composition intumescente ignifugeante ajoutée à du polyéthylène dans une première série d'essais et à du polypropylène, dans une seconde série d'essais.

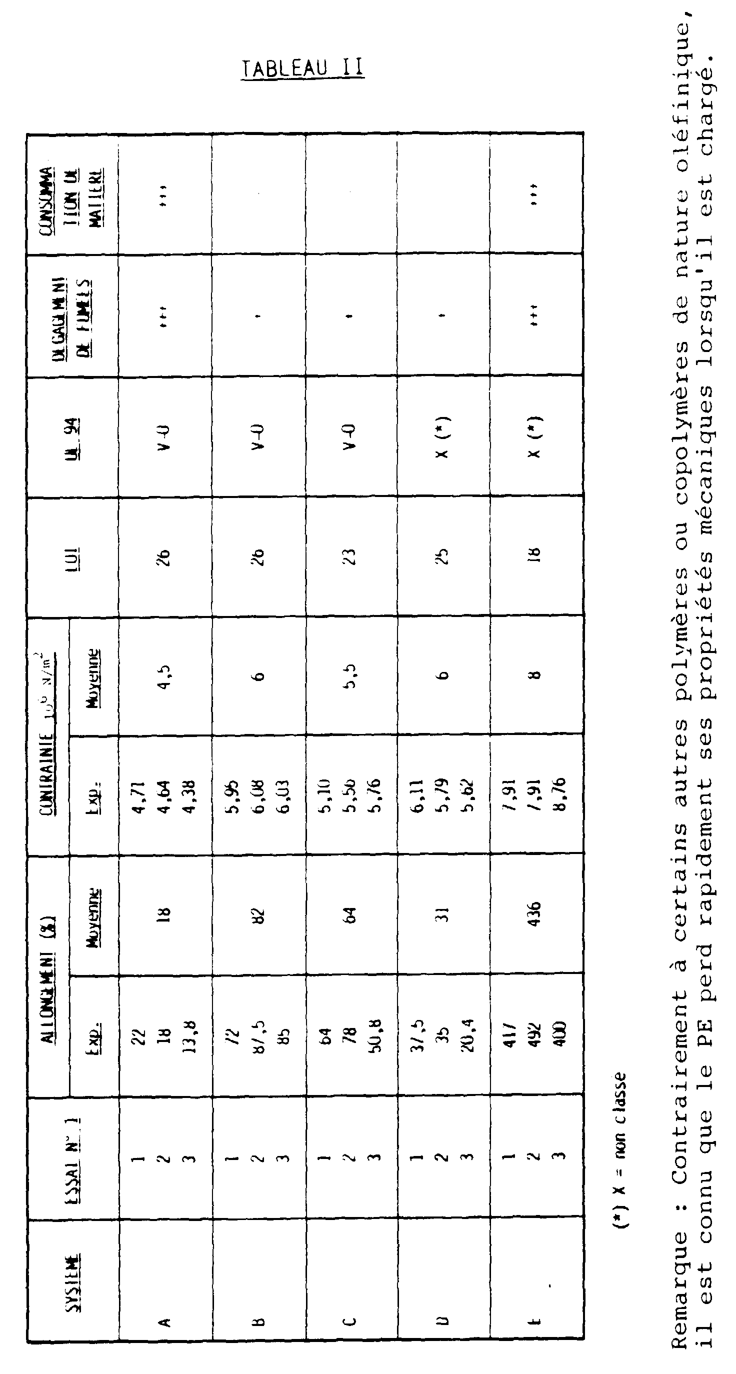

Dans les 2 séries d'essais, le sucre-alcool utilisé est du xylitol et la charge est de 30 % en poids.

### Série 1

Sucre-alcool = xylitol
Polymère = polyéthylène

Les résultats sont présentés dans le tableau III.

### Série 2

Sucre-alcool = xylitol
Polymère = Polypropylène

Les résultats sont présentés dans le tableau IV.

Aussi bien pour le polyéthylène que pour le polypropylène, on remarque que l'optimum quant aux propriétés "retard au feu" est obtenu pour un rapport xylitol / PY de 54/46.

### EXEMPLE IV :

Influence du taux de charge de la composition intumescente ignifugeante selon l'invention dans le matériau thermoplastique.

Les essais ont été réalisés avec du sorbitol, du mannitol et du xylitol à titre d'agent de carbonisation. Le rapport molaire sucre-alcool / PY est de 50/50 pour le sorbitol et le mannitol, et de 54/46 pour le xylitol. Le matériau polymère choisi est du polyéthylène.

Les résultats sont donnés dans le tableau V.

Il ressort du tableau V que l'efficacité de la composition intumescente selon l'invention augmente avec son taux de charge dans le polymère.

Il existe cependant un facteur limitant à cette augmentation. En effet, un taux de charge trop élevé entraîne une altération des propriétés mécaniques ainsi qu'un accroissement des fumées et de la consommation de matière.

En tenant compte des propriétés mécaniques, l'optimum se situe aux environs de 35 % pour chacun des sucres-alcools testés.

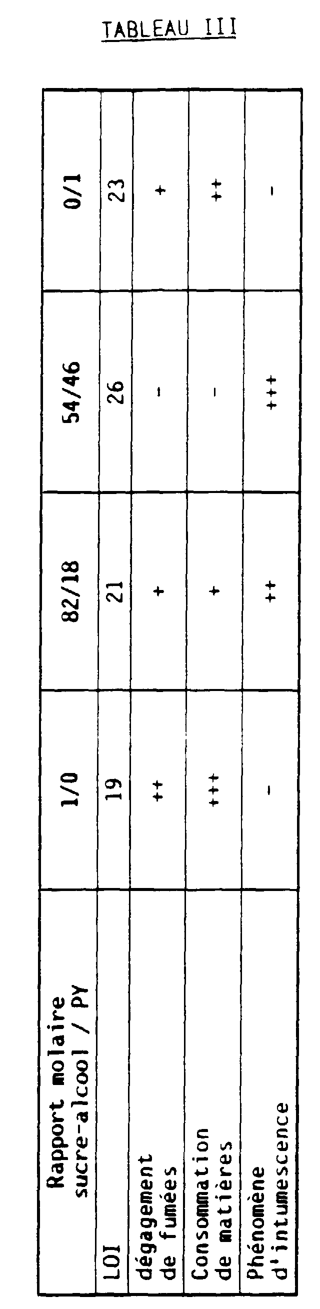

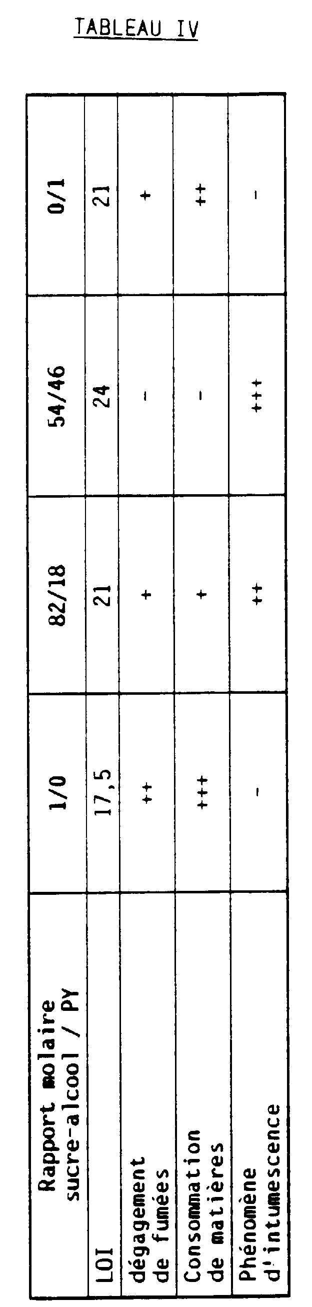

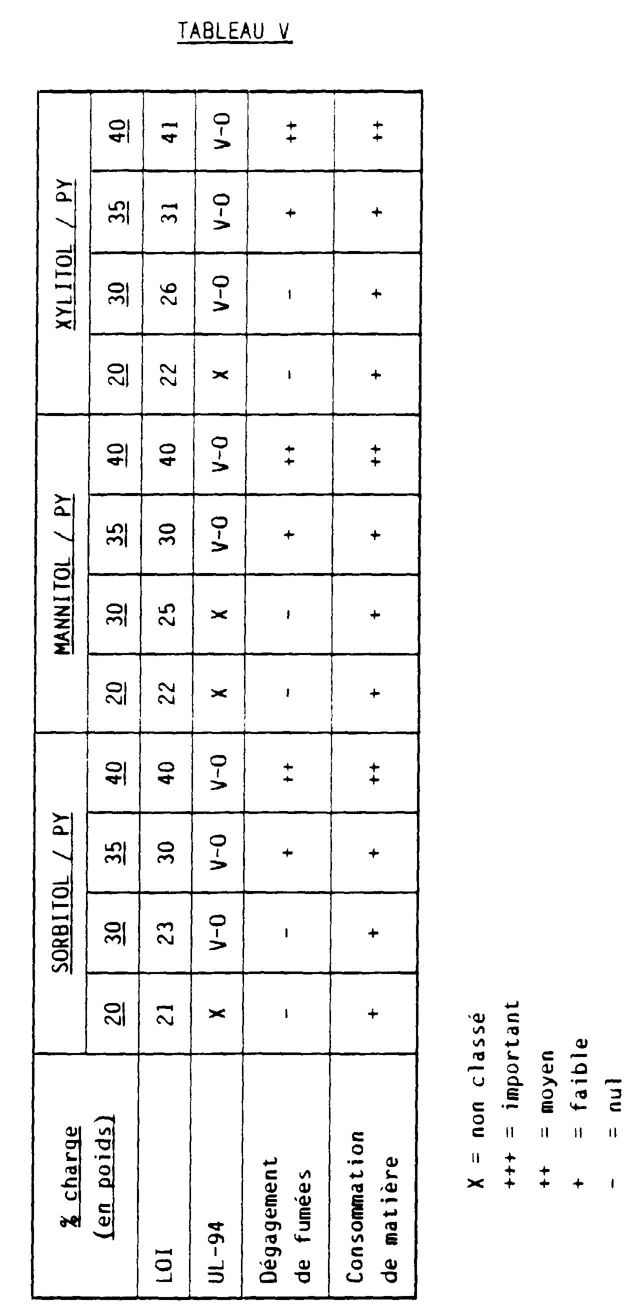

## Revendications

1. Composition intumescente ignifugeante, applicable aux matériaux polymères, caractérisée en ce qu'elle comprend un mélange :
. d'au moins un agent de carbonisation choisi parmi les monosaccharides hydrogénés suivants : sorbitol, arabitol, xylitol, mannitol ou un mélange d'entre eux,
. un agent acide déshydratant à base de pyrophosphate diammonique,
à l'exception des compositions constituées par :
(I) 20 à 60 % en poids d'une huile de silicone,
(II) 10 à 40 % en poids d'une résine de silicone,
(III) 5 à 60 % en poids d'un agent déshydratant, et
(IV) un alcool polyhydrique dans un rapport pondéral avec ledit agent déshydratant compris entre environ 1/9 et environ 1/5.

2. Composition selon la revendication 1, caractérisée en ce qu'elle comprend également au moins un agent de gonflement.

3. Composition selon l'une quelconque des revendications 1 et 2, caractérisée en ce que l'agent de carbonisation est le xylitol.

4. Composition selon l'une quelconque des revendications 1 à 3, caractérisée en ce qu'elle comprend :
. de 20 à 80, de préférence de 40 à 70 et plus préférentiellement encore de 45 à 65 % molaire d'agent de carbonisation,
. et de 20 à 80, de préférence de 30 à 60, et plus préférentiellement encore de 35 à 55 % molaire d'agent déshydratant.

5. Matériau polymère caractérisé en ce qu'il comprend une composition ignifugeante selon l'une quelconque des revendications 1 à 4.

6. Matériau selon la revendication 5, caractérisé en ce que la composition ignifugeante représente de 20 à 50 %, de préférence de 25 à 35 % en poids dudit matériau.

7. Matériau selon l'une des revendications 5 ou 6, caractérisé en ce qu'il est choisi parmi les polymères et copolymères d'oléfines.

8. Matériau polymère selon l'une des revendications 5 ou 6, caractérisé en ce qu'il est constitué par une peinture, un vernis ou similaire.

## Patentansprüche

1. Schäumende flammwidrige Zusammensetzung, die auf Polymermaterialien aufgebracht bzw. angewendet werden kann, dadurch gekennzeichnet, daß sie umfaßt eine Mischung aus
- mindestens einem Carbonisierungsmittel, ausgewählt aus den folgenden hydrierten Monosacchariden: Sorbit, Arabit, Xylit, Mannit oder einer Mischung davon, und
- einer dehydratisierenden Säure auf Basis von Diammoniumpyrophosphat,
ausgenommen Zusammensetzungen, die bestehen aus:
(I) 20 bis 60 Gew.-% eines Siliconöls,
(II) 10 bis 40 Gew.-% eines Siliconharzes,
(III) 5 bis 60 Gew.-% eines Dehydratisierungsmittels und
(IV) einem Polyhydroxyalkohol in einem Gewichtsverhältnis, bezogen auf das genannte Dehydratisierungsmittel, zwischen etwa 1/9 und etwa 1/5.

2. Zusammensetzung nach Anspruch 1, dadurch gekennzeichnet, daß sie außerdem mindestens ein Quellmittel enthält.

3. Zusammensetzung nach einem der Ansprüche 1 und 2, dadurch gekennzeichnet, daß es sich bei dem Carbonisierungsmittel um Xylit handelt.

4. Zusammensetzung nach einem der Ansprüche 1 bis 3, dadurch gekennzeichnet, daß sie umfaßt
- 20 bis 80, vorzugsweise 40 bis 70 und insbesondere 45 bis 65 Mol-% Carbonisierungsmittel und
- 20 bis 80, vorzugsweise 30 bis 60, insbesondere 35 bis 55 Mol-% Dehydratisierungsmittel,

5. Polymermaterial, dadurch gekennzeichnet, daß es eine flammwidrige Zusammensetzung nach einem der Ansprüche 1 bis 4 umfaßt.

6. Material nach Anspruch 5, dadurch gekennzeichnet, daß die flammwidrige Zusammensetzung 20 bis 50, vorzugsweise 25 bis 35 Gew.-% des genannten Materials darstellt.

7. Material nach einem der Ansprüche 5 oder 6, dadurch gekennzeichnet, daß es ausgewählt wird aus den Polymeren und Copolymeren von Olefinen.

8. Polymermaterial nach einem der Ansprüche 5 oder 6, dadurch gekennzeichnet, daß es aus einer Anstrichfarbe (einem Lack), einem Firnis oder dgl. besteht.

## Claims

1. Fire-retardant intumescent composition applicable to polymeric materials, characterized in that it comprises a mixture:
- of at least one carbonizing agent chosen from the following hydrogenated monosaccharides: sorbitol, arabitol, xylitol, mannitol or a mixture thereof,
- a dehydrating acidic agent based on diammonium pyrophosphate,
with the exception of compositions consisting of:
(I) 20 to 60 % by weight of a silicone oil,
(II) 10 to 40 % by weight of a silicone resin,
(III) 5 to 60 % by weight of a dehydrating agent, and
(IV) a polyhydric alcohol in a weight ratio to the said dehydrating agent of between approximately 1/9 and approximately 1/5.

2. Composition according to Claim 1, characterized in that it also comprises at least one swelling agent.

3. Composition according to either of Claims 1 and 2, characterized in that the carbonizing agent is xylitol.

4. Composition according to any one of Claims 1 to 3, characterized in that it comprises:
- from 20 to 80, preferably from 40 to 70 and still more preferably from 45 to 65 mol% of carbonizing agent,
- and from 20 to 80, preferably from 30 to 60 and still more preferably from 35 to 55 mol% of dehydrating agent.

5. Polymeric material characterized in that it comprises a fire-retardant composition according to any one of Claims 1 to 4.

6. Material according to Claim 5, characterized in that the fire-retardant composition represents from 20 to 50 %, preferably from 25 to 35 % by weight of the said material.

7. Material according to either of Claims 5 or 6, characterized in that it is chosen from olefin polymers and copolymers.

8. Polymeric material according to either of Claims 5 or 6, characterized in that it consists of a paint, a varnish or the like.
